# EUROPEAN PATENT APPLICATION

(11) **EP 3 261 192 A1**
(43) Date of publication of application: **27.12.2017**
(21) Application number: 17177460.7
(22) Date of filing: 22.06.2017
(51) Int. Cl.: H01R 13/52, H01R 13/629, H01R 13/533

(54) **ELECTRICAL CONNECTOR AND ELECTRICAL CONNECTOR ASSEMBLY**

(30) Priority: 24.06.2016 JP 2016125744
(71) Applicant: Tyco Electronics Japan G.K., Kawasaki-shi, Kanagawa 213-8535 (JP); TOYOTA JIDOSHA KABUSHIKI KAISHA, Toyota-shi, Aichi 471-8571 (JP)
(72) Inventor: Matsumoto, Tsugumi, Kawasaki-shi, Kanagawa 213-8535 (JP); Komiyama, Ryuichi, Kawasaki-shi, Kanagawa 213-8535 (JP); Funayama, Tomoyuki, Toyota-shi, Aichi 471-8571 (JP)
(74) Representative: Johnstone, Douglas Ian

(57) **Abstract**

A connector including a male housing (10) and a water stop groove (27) extending along a circumferential direction of the male housing (10) and being orthogonal to a direction of mating with a female housing (30). Water flows towards a front end (11) of the male housing (10) due to capillary action. When the water reaches a rear edge (29) of the water stop groove (27) where no upper wall is formed, the water is exposed to a wider space from a narrower space. Accordingly, in a region of the male housing (10) that is positioned forwardly of the rear edge(29), the capillary action no longer works. Surface tension acts on the water, which allows the water to be accumulated rearwardly of the rear edge (29).

## Description

### BACKGROUND OF THE INVENTION

### Field of the Invention

The present invention relates to an electrical connector, and more particularly, to an electrical connector having a light waterproofing or splash-proof performance.

### Description of Related Art

Electrical connectors used for vehicles are categorized into two types, one of which is disposed in a region where water directly drips, and the other of which is not disposed in such a region where water directly drips. Examples of the former type include an electrical connector used for lines and circuit boards to be provided in an engine room or compartment. Examples of the latter type include an electrical connector used for an electric component disposed in a vehicle. In the electrical connector corresponding to the former type, a member called a rubber seal ring that is separate from a housing is interposed between, for example, a male housing and a female housing, thereby ensuring a high waterproof performance. On the other hand, in the electrical connector corresponding to the latter type, the waterproof performance is ensured by, for example, making some alterations to the structure of the housing, instead of using the seal ring, because only a light waterproofing performance is required.

For example, JP 2005-108499A discloses that water may spread through a small gap between the male housing and the female housing due to capillary action and may reach a terminal insertion hole which is located on the rear side of the electrical connector in the mating direction. JP 2005-108499A discloses that a recess is provided in the circumferential direction of the housing and water is accumulated in this recess, thereby preventing the water from flowing to the rear side of the recess.

Although the waterproof performance is ensured until the recess is filled with water in the waterproof structure of JP 2005-108499A in which water is accumulated in the recess, when the amount of the water exceeds the capacity of the recess, the water overflows from the recess. In other words, when the structure proposed in JP 2005-108499A is exposed to water which has exceeded a prescribed amount of the recess, the waterproof performance is considerably lowered.

In view of the above, an object of the present invention is to provide an electrical connector capable of maintaining a waterproof performance even when the amount of water to which the electrical connector is exposed is increased.

### SUMMARY OF THE INVENTION

An electrical connector according to the present invention is an electrical connector configured to be mated to a mating electrical connector, including: a housing; and a water stop groove extending along a circumferential direction of the housing, the water stop groove being orthogonal to a mating direction in which the electrical connector is mated with the mating electrical connector, wherein the water stop groove allows a surface tension to act on water accumulated in a region from a mating opening to the water stop groove.

The water stop groove according to the present invention can be continuously formed in an entire region in the circumferential direction of the housing, or can be formed in a specific region in the circumferential direction of the housing.

The water stop groove according to the present invention can be formed so as to be positioned more rearward in the mating direction than a center in the mating direction.

The housing according to the present invention may include a guide extending in the mating direction so as to guide the electrical connector to mate with the mating electrical connector. In the present invention, this guide is preferably provided only on a front side of the water stop groove in the mating direction.

The housing according to the present invention may include a guide groove or further water stop groove that is disposed on a rear side of the water stop groove in the mating direction, extends along the circumferential direction, and has an opening area smaller than that of the water stop groove. This guide groove is based on the premise that water entering from the mating opening is filled in the guide groove.

There are two types of electrical connectors, i.e., the connector that holds a female contact and the connector that holds a male contact. The electrical connectors according to the present invention can be applied to any one of the connectors. However, the present invention is preferably applied to the male housing of the connecter that holds the female contact, and the water stop groove in this embodiment is formed in the outer peripheral surface of the male housing.

According to the electrical connector of the present invention, the water stop groove is provided in the circumferential direction of the housing. This water stop groove is not for the purpose of accumulating water, but for the purpose of preventing the water from reaching the water stop groove and the leading end thereof by allowing a surface tension to act on the water accumulated in the region leading to the water stop groove. Thus, according to the present invention, the water stop groove functions as a stopper for water, thereby preventing the water from flowing to a front side of a water stop groove in the mating direction.

### BRIEF DESCRIPTION OF THE DRAWINGS

FIG. 1A, FIG. 1B and FIG. 1C each show a male housing of an electrical connector according to a first embodiment of the present invention, FIG. 1A being a perspective view, FIG. 1B being a sectional view taken along a line Ib-Ib of FIG. 1A, and FIG. 1C being a sectional view taken along a line Ic-Ic of FIG. 1A;
FIG. 2A and FIG. 2B each show a female housing according to the first embodiment, FIG. 2A being a perspective view, and FIG. 2B being a transparent view of FIG. 2A;
FIG. 3A and FIG. 3B each show an electrical connector assembly according to the first embodiment, FIG. 3A being a sectional view corresponding to FIG. 1B, and FIG. 3B being a sectional view corresponding to FIG. 1C;
FIG. 4A, FIG. 4B and FIG. 4C each show a male housing of an electrical connector according to a second embodiment of the present invention, FIG. 4A being a perspective view, FIG. 4B being a sectional view taken along a line IVb-IVb of FIG. 4A, and FIG. 4C being a sectional view taken along a line IVc-IVc of FIG. 4A;
FIG. 5A and FIG. 5B each show a female housing according to the second embodiment, FIG. 5A being a perspective view, and FIG. 5B being a transparent view of FIG. 5A;
FIG. 6A and FIG. 6B each show an electrical connector assembly according to the second embodiment, FIG. 6A being a sectional view corresponding to FIG. 4B, and FIG. 6B being a sectional view corresponding to FIG. 4C;
FIG. 7A, FIG. 7B and FIG. 7C each show a male housing of an electrical connector according to a third embodiment of the present invention, FIG. 7A being a perspective view, FIG. 7B being a sectional view taken along a line VIIb-VIIb of FIG. 7A, and FIG. 7C being a sectional view taken along a line VIIc-VIIc of FIG. 7A;
FIG. 8A and FIG. 8B each show an electrical connector assembly according to the third embodiment, FIG. 8A being a sectional view corresponding to FIG. 7B, and FIG. 8B being a sectional view corresponding to FIG. 7C;
FIG. 9A, FIG. 9B and FIG. 9C each are a diagram for explaining a water stop groove according to the first embodiment, FIG. 9A showing the water stop groove according to the first embodiment, FIG. 9B showing an example in which the groove is small, and FIG. 9C showing an example in which the groove is formed integrally with a mating opening; and
FIG. 10A, FIG. 10B and FIG. 10C each show a modified example of the embodiment, FIG. 10A showing an electrical connector in which the water stop groove is partially formed, FIG. 10B showing an electrical connector in which an upper guide groove does not reach the water stop groove, and FIG. 10C showing an example in which the water stop groove is formed in the female housing.

### DETAILED DESCRIPTION OF THE PREFERRED EMBODIMENTS

Embodiments of the present invention will be described below with reference to the accompanying drawings.

First to third embodiments are sequentially described below. The first embodiment includes a water stop groove as a characteristic element in the present invention, and the second and third embodiments relate to an example in which the effect of the water stop groove is improved.

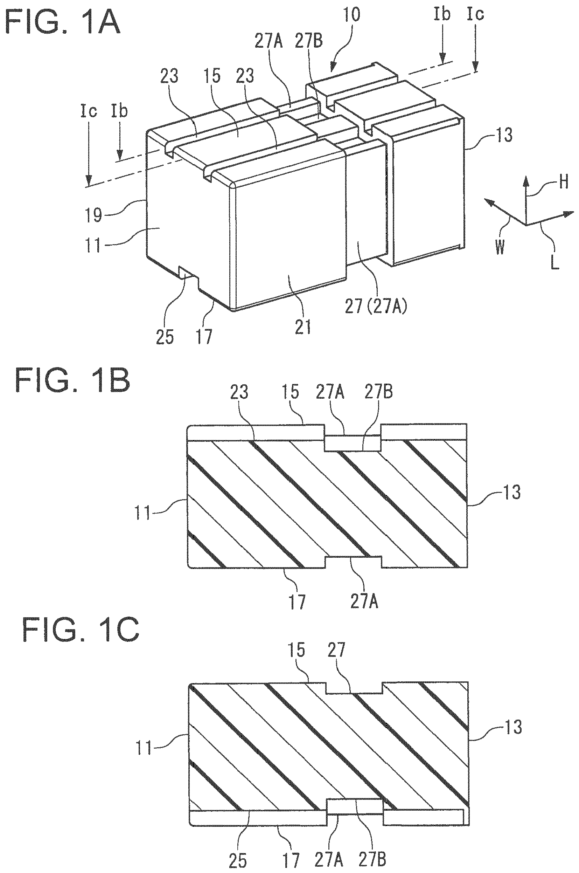

As shown in FIGS. 1A to 3B, an electrical connector assembly 1 according to a first embodiment includes a male housing 10 and a female housing 30. The male housing 10 holds a female contact, which is not shown, thereby forming an electrical connector (first electrical connector) of the present invention. The female housing 30 holds a male contact, which is not shown, thereby forming a mating electrical connector (second electrical connector) of the present invention. When the male housing 10 and the female housing 30 are mated together, the female contact and the male contact are electrically connected. The operation and advantageous effects of the electrical connector assembly 1 will be described below after the structures of the male housing 10 and the female housing 30 are sequentially described.

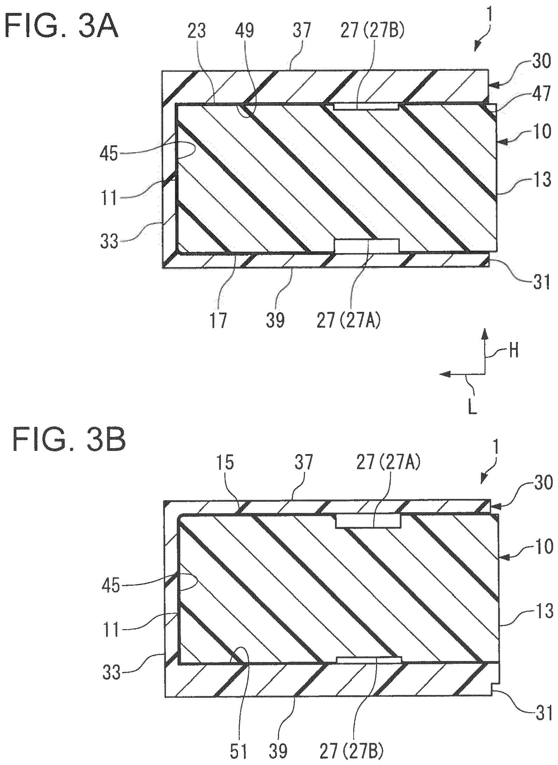

The male housing 10 is obtained by injection-molding a resin having electrical insulation. As shown in FIGS. 1A to 1C, the male housing 10 has a front end 11 and a rear end 13. The front end 11 is first inserted into a receiving cavity 35 of the female housing 30, when the male housing 10 is mated with the female housing 30. The rear end 13 is opposed to the front end 11. As shown in FIGS. 3A and 3B, when the male housing 10 and the female housing 30 are mated together, the front end 11 of the male housing 10 and a back wall 45 of the female housing 30 are opposed to each other.

Note that in each of the male housing 10 and the female housing 30, a side where the male housing 10 and the female housing 30 are mated is defined as a front side and a side opposite to the front side is defined as a rear side. A direction connecting the front side and the rear side is defined as a mating direction L.

The male housing 10 includes an upper wall 15, a lower wall 17, a left side wall 19, and a right side wall 21, which each connects the front end 11 and the rear end 13. The upper wall 15 and the lower wall 17 are provided in parallel at a predetermined interval in a height direction H, and the left side wall 19 and the right side wall 21 are provided in parallel at a predetermined interval in a width direction W. The left side wall 19 and the right side wall 21 are orthogonal to the upper wall 15 and the lower wall 17.

As shown in FIGS. 1A to 2B, in the male housing 10, the upper wall 15 is provided with upper guide grooves 23. Upper guide ridges 49 of the female housing 30 are inserted into the upper guide grooves 23, respectively, which contribute to smooth mating of the male housing 10 and the female housing 30.

The upper guide grooves 23 are each hollowed by a predetermined depth from the upper wall 15 to the lower wall 17. In this embodiment, the upper guide grooves 23 penetrate through the front end 11 and the rear end 13 and are linearly formed. In this embodiment, two upper guide grooves 23 are formed at positions line-symmetric with respect to the center in the width direction W at an interval in the width direction W.

As shown in FIGS. 1A to 2B, in the male housing 10, the lower wall 17 is provided with a lower guide groove 25. A lower guide ridge 51 of the female housing 30 is inserted into the lower guide groove 25, which contributes to smooth mating of the male housing 10 and the female housing 30.

The lower guide groove 25 is hollowed by a predetermined depth from the lower wall 17 to the upper wall 15. Like the upper guide grooves 23, the lower guide groove 25 penetrates through the front end 11 and the rear end 13 and is linearly formed. In this embodiment, the lower guide groove 25 is provided at the center in the width direction W.

The male housing 10 includes a water stop groove 27 extending along the circumferential direction of the outer peripheral surface. In a state where the male housing 10 and the female housing 30 are mated together, the water stop groove 27 prevents the water, which enters from the rear end 13 side and flows through a small gap between the male housing 10 and the female housing 30, from entering, getting over the water stop groove 27, and flowing toward the front end 11 side. The water stop operation of the water stop groove 27 will be described in detail later.

In this embodiment, the water stop groove 27 is continuously formed in the entire region in the circumferential direction of the male housing 10. Specifically, the water stop groove 27 is formed in each of the upper wall 15, the lower wall 17, the left side wall 19, and the right side wall 21 so as to be orthogonal to the mating direction L. The water stop groove 27 is provided so as to be positioned closer to the rear end 13, i.e., more rearward in the mating direction L, than the center in the mating direction L. This structure can prevent ingress of water at a position near a mating opening 47 and prevent the water from reaching the front side in the mating direction L.

Parts of the water stop groove 27 that correspond to the upper guide grooves 23 and the lower guide groove 25 form deep grooves 27B, and the other parts thereof form shallow grooves 27A. This structure is intended to obtain water stop effects with the water stop groove 27.

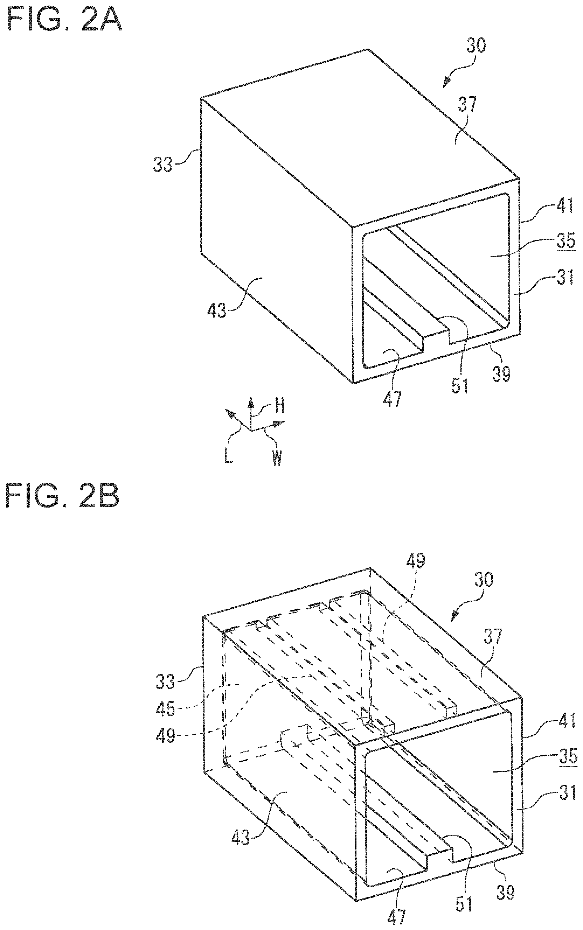

The female housing 30 is obtained by injection-molding a resin having an electrical insulation. As shown in FIGS. 2A to 3B, the female housing 30 includes a front end 31 and a back end 33. The front end 31 receives the front end 11 of the male housing 10 when the female housing 30 is mated with the male housing 10. The back end 33 is opposed to the front end 31. As shown in FIGS. 2A to 3B, the female housing 30 includes the back wall 45 that is opposed to the front end 11 of the male housing 10 when the male housing 10 and the female housing 30 are mated together. The back wall 45 holds a male contact, which is not shown and is drawn or extends backwardly.

The female housing 30 includes the receiving cavity 35 in which the male housing 10 is accommodated. The receiving cavity 35 is formed in a rectangular parallelepiped shape so as to accommodate the male housing 10 with a minimum gap formed therebetween. The receiving cavity 35 is surrounded by an upper wall 37, a lower wall 39, a left side wall 41, a right side wall 43, and the back wall 45. At the front end 31, the mating opening 47 is formed as an opening into which the male housing 10 is inserted.

As shown in FIG. 2B, in the female housing 30, the inner surface of the upper wall 37 that faces the receiving cavity 35 is provided with a pair of upper guide ridges 49, 49. Further, in the female housing 30, the inner surface of the lower wall 39 that faces the receiving cavity 35 is provided with the lower guide ridge 51. The upper guide ridges 49 extends through the entire region in the mating direction L of the upper wall 37 and are linearly formed. The lower guide ridge 51 extends through the entire region in the mating direction L of the lower wall 39 and is linearly formed.

When the female housing 30 and the male housing 10 are mated together, the upper guide ridges 49 are respectively inserted into the upper guide grooves 23 of the male housing 10, thereby mutually guiding the female housing 30 and the male housing 10. When the female housing 30 and the male housing 10 are mated together, the lower guide ridge 51 is inserted into the lower guide groove 25 of the male housing 10, thereby mutually guiding the female housing 30 and the male housing 10.

In the electrical connector assembly 1, when the male housing 10 is inserted from the front end 11 thereof to the mating opening 47 of the female housing 30 and the male housing 10 is pressed until the front end 11 thereof reaches the back wall 45 of the female housing 30, the electrical connector assembly 1 is brought into a mating complete state shown in FIGS. 3A and 3B.

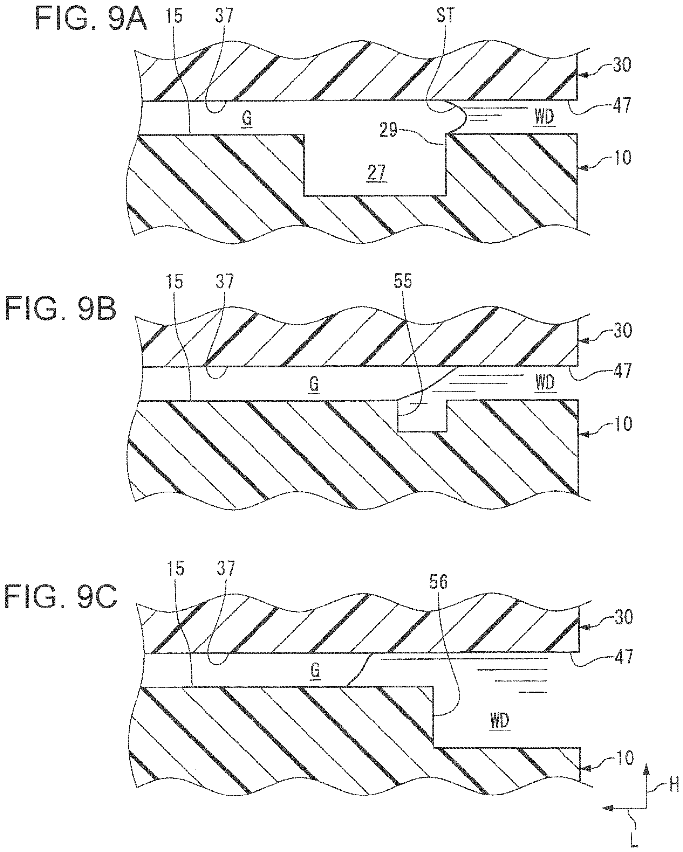

In the mating complete state of the electrical connector assembly 1, as shown in FIG. 9A, water WD may drop toward the mating opening 47 of the female housing 30. When the water WD reaches the mating opening 47, for example, the water enters a small gap G between the upper wall 15 of the male housing 10 and the upper wall 37 of the female housing 30. Because the gap G is narrow, capillary action occurs in the water WD which has entered the gap G, so that the water WD flows in a direction away from the mating opening 47. The water flowing through the gap between the upper wall 15 and the upper wall 37 has been described above. Similarly, the water WD flows through other gaps such as a gap between the lower wall 17 of the male housing 10 and the lower wall 39 of the female housing 30, depending on the amount of the water WD.

The water may flow through the gap G between the upper wall 15 and the upper wall 37 due to capillary action and may reach the water stop groove 27. One example thereof is a situation in which a certain amount of the water WD drops to the mating opening 47. However, in this embodiment, the flow of the water WD which has flowed to the water stop groove 27 is stopped at a rear edge 29 of the water stop groove 27, so that the water does not easily fall down into the water stop groove 27. The reason for this is as follows.

Since the gap G is narrow in a region in which the upper wall 15 and the upper wall 37 are opposed to each other, the water WD flows toward the front end 11 of the male housing 10, i.e., toward the front side in the mating direction L, due to capillary action. However, when the water WD reaches the rear edge 29 of the water stop groove 27, the water WD is exposed to a wider space from such a narrower space. Accordingly, in a region of the male housing 10 that is positioned more forward than the rear edge 29, the capillary action no longer works, while a surface tension ST acts on the water WD accumulated in the region from the mating opening 47 to the water stop groove 27. As a result, the water WD tends to be accumulated in the rear side from the rear edge 29 as shown in FIG. 9A. Therefore, although the water WD flows to the vicinity of the water stop groove 27, the water stop groove 27 functions as a stopper, which prevents the water from flowing to the front side of the water stop groove 27 in the mating direction L. This function is effective unless the water WD having sufficient energy to break the surface tension ST drops.

For example, when the water WD rushes to the mating opening 47, the surface tension ST may be broken, so that the water WD may enter the water stop groove 27. However, the water stop groove 27 can function as a stopper for giving the surface tension ST until the water stop groove 27 is filled with the entering water WD.

While this embodiment illustrates an example in which only one water stop groove 27 is provided, a plurality of water stop grooves 27 may be provided at intervals in the mating direction L, to thereby make it possible to further improve the waterproofing effect.

In this case, the width and depth of each groove are important factors to determine whether the water stop groove 27 functions as a water stopper. According to the study by the present inventors, it is confirmed that, for example, a groove having a width of 0.5 mm and a depth of 1.0 mm cannot fully achieve the above-described sufficient water stop effect, so that water enters the groove. Accordingly, even when a groove 55 shown in FIG. 9B is provided at a position similar to that shown in FIG. 9A, the groove 55 does not correspond to the water stop groove 27. Note that in this case, the term "width" refers to the dimension in the mating direction L and the term "depth" refers to the dimension in the height direction H.

According to the study by the present inventors, it is confirmed that a groove having a width of 2.5 mm and a depth of 1.0 mm can achieve the above-described water stop effect. However, these values are merely examples, and it is expected that the width and depth of the water stop groove 27 are determined depending on the specifications of the male housing 10 and the female housing 30 after confirming whether the water stop effect is achieved or not by experiments including simulations.

As described above, according to the electrical connector assembly 1, the water stop groove 27 is integrally formed in the male housing 10, thereby ensuring a waterproof performance to some extent even when the amount of the water WD dropping to the mating opening 47 is increased.

As shown in FIG. 9C, even when a groove 56 having dimensions similar to those of the water stop groove 27 of this embodiment is formed continuously with the mating opening 47, the groove 56 does not function as the water stop groove. Since the gap G on the front side of the groove 56 is narrower, capillary action occurs and the water WD is caused to flow to the front side.

Specifically, the water stop groove 27 is provided on the front side of the narrow gap G in the mating direction L where the capillary action occurs, so that the water stop groove 27 functions as a water stopper.

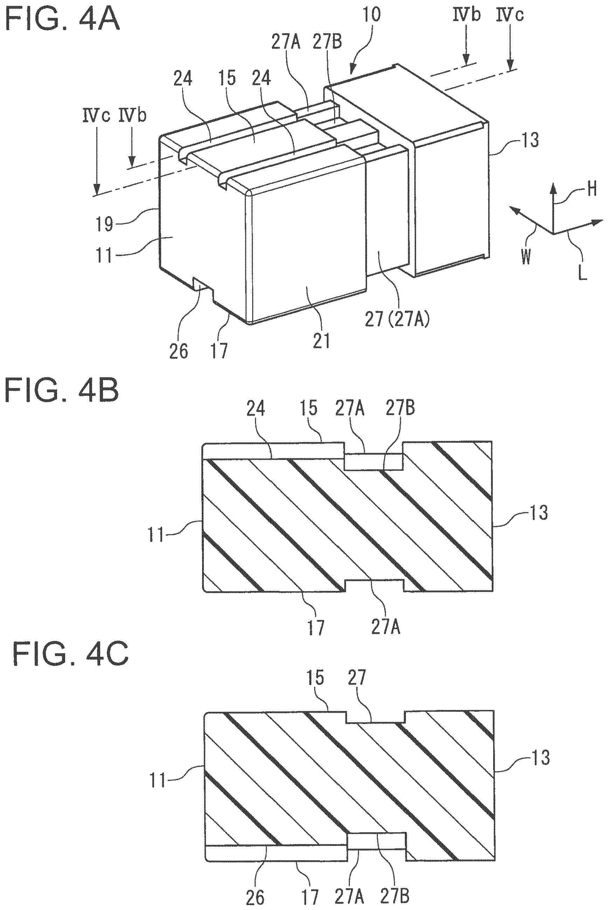

Next, an electrical connector assembly 2 according to a second embodiment of the present invention will be described with reference to FIGS. 4A to 6B.

The basic structure of the electrical connector assembly 2 and the feature of the electrical connector assembly 2 that a waterproof performance is ensured to some extent by providing the water stop groove 27 are the same as those of the electrical connector assembly 1. However, in the electrical connector assembly 2, in order to improve the waterproof performance, upper guide grooves 24, a lower guide groove 26, upper guide ridges 50, and a lower guide ridge 52 are provided only on the front side of the water stop groove 27. Note that the elements of the electrical connector assembly 2 that are the same as those of the electrical connector assembly 1 are denoted by reference symbols in FIGS. 1A to 3B that are the same as those in FIGS. 4A to 6B, and thus descriptions thereof are omitted.

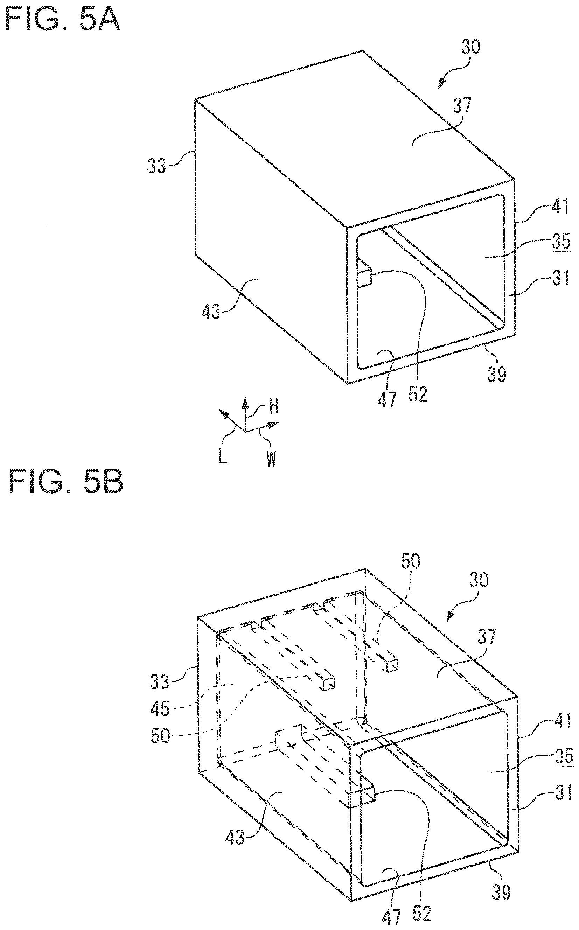

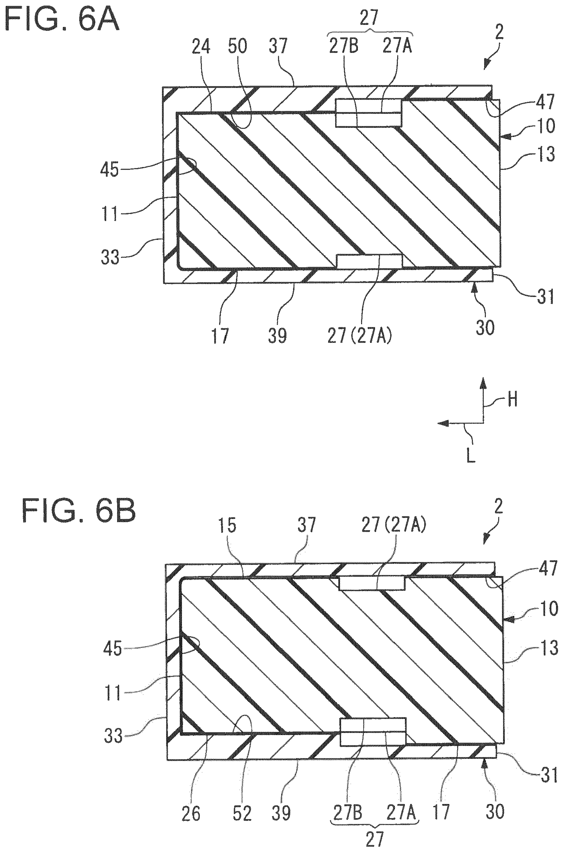

As shown in FIGS. 6A and 6B, in the electrical connector assembly 2, the male housing 10 has a structure in which a pair of upper guide grooves 24, 24 and the lower guide groove 26 are provided so as to penetrate from the front end 11 to the water stop groove 27, but are not provided between the water stop groove 27 and the rear end 13. As shown in FIGS. 5A and 5B, the female housing 30 includes the upper guide ridges 50 and the lower guide ridge 52 having lengths respectively corresponding to the positions of the upper guide grooves 24 and the lower guide groove 26 which are shorter than those of the first embodiment. The upper guide ridges 50 and the lower guide ridge 52 are formed only in a predetermined range from the back wall 45 to the front end 31.

Like in the electrical connector assembly 1, in the electrical connector assembly 2, when the male housing 10 is inserted into the mating opening 47 of the female housing 30 from the front end 11 of the male housing 10 and the male housing 10 is pressed until the front end 11 thereof reaches the back wall 45 of the female housing 30, the male housing 10 is brought into a mating complete state shown in FIGS. 6A and 6B. However, the range in which the upper guide grooves 24 and the upper guide ridges 50 are mutually guided and the range in which the lower guide groove 26 and the lower guide ridge 52 are mutually guided are limited to a region leading to the water stop groove 27.

As shown in FIGS. 6A and 6B, in the electrical connector assembly 2, the upper guide grooves 24 and the upper guide ridges 50 and the lower guide groove 26 and the lower guide ridge 52 are not provided between the water stop groove 27 and the mating opening 47 in the mating direction L. If the upper guide grooves 24 and the upper guide ridges 50 and the lower guide groove 26 and the lower guide ridge 52 are provided, when the water WD drops to the mating opening 47, the water WD flows to the water stop groove 27 through the gap between the upper guide grooves 24 and the upper guide ridges 50 and the gap between the lower guide groove 26 and the lower guide ridge 52.

However, in the electrical connector assembly 2, the guides (the upper guide grooves 24 and the upper guide ridges 50 and the lower guide groove 26 and the lower guide ridge 52) are not provided between the water stop groove 27 and the mating opening 47, so that the water WD can be prevented from flowing to the water stop groove 27 through the guide members.

In this case, between the water stop groove 27 and the mating opening 47, the water WD can flow through, for example, the gap G between the upper wall 15 and the upper wall 37, each of which is flat, until the water reaches the water stop groove 27. However, in the guide part, continuous convex and concave shapes are formed in the mating direction L. A plurality of surfaces of these shapes forms the narrow gap G in contact with the water WD. Accordingly, in the guide part, the capillary action is likely to be maintained and the water WD is likely to enter the water stop groove 27. Therefore, the electrical connector assembly 2 eliminates the provision of a route which the water WD can easily enter between the water stop groove 27 and the mating opening 47, thereby ensuring a waterproof performance higher than that in the electrical connector assembly 1.

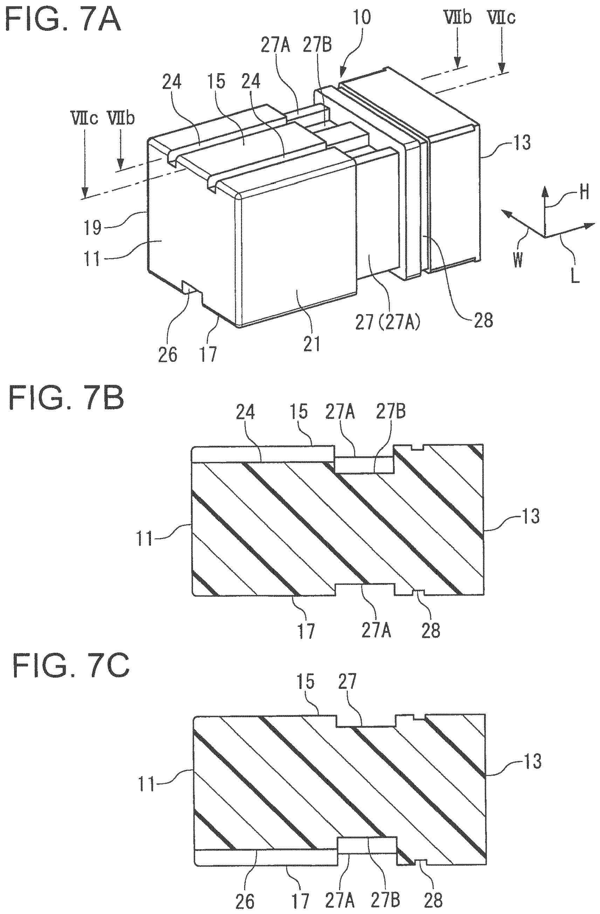

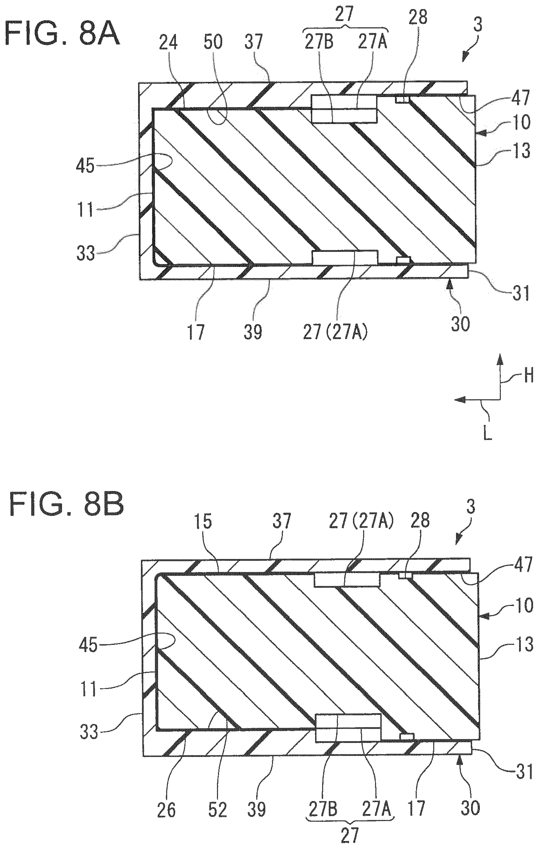

Next, an electrical connector assembly 3 according to a third embodiment of the present invention will be described with reference to FIGS. 7A to 8B.

The basic structure of the electrical connector assembly 3 and the features of the electrical connector assembly 3 that the water stop groove 27 is provided and the upper guide grooves 24, the lower guide groove 26, the upper guide ridges 50, and the lower guide ridge 52 are provided only on the front side of the water stop groove 27 are the same as those of the electrical connector assembly 2. However, the electrical connector assembly 3 includes a guide groove 28 that is formed on the rear side of the water stop groove 27, thereby ensuring a much higher waterproof performance. Note that the elements of the electrical connector assembly 3 that are the same as those of the electrical connector assembly 2 are denoted by reference symbols in FIGS. 7A to 8B that are the same as those in FIGS. 4A to 6B, and thus descriptions thereof are omitted.

As shown in FIGS. 7A to 8B, the electrical connector assembly 3 includes the guide groove 28 which is adjacent to the water stop groove 27 of the male housing 10. The guide groove 28 is provided between the water stop groove 27 and the rear end 13, i.e., on the rear side of the water stop groove 27 in the mating direction L. Like the water stop groove 27, the guide groove 28 is continuously formed in the circumferential direction of the male housing 10. However, the width and depth of the guide groove 28 are smaller than those of the water stop groove 27. That is, the guide groove 28 is formed so as to have an opening area smaller than that of the water stop groove 27. The guide groove 28 is not formed so as to cause the surface tension ST on the water WD, but instead is based on the premise that the water WD enters the guide groove 28. Specifically, when the water WD flowing the gap (clearance) between, for example, the upper wall 15 and the upper wall 37 enters and is filled in the guide groove 28 before reaching the water stop groove 27, the momentum of the water WD is reduced. Accordingly, even when the water WD exceeds the guide groove 28 and reaches the water stop groove 27, the water stop function can be enhanced due to the surface tension ST of the water stop groove 27.

The present invention has been described above with reference to preferred embodiments. However, the structures illustrated in the above embodiments may be selected or omitted, or may be modified as appropriate to other structures without departing from the scope of the present invention.

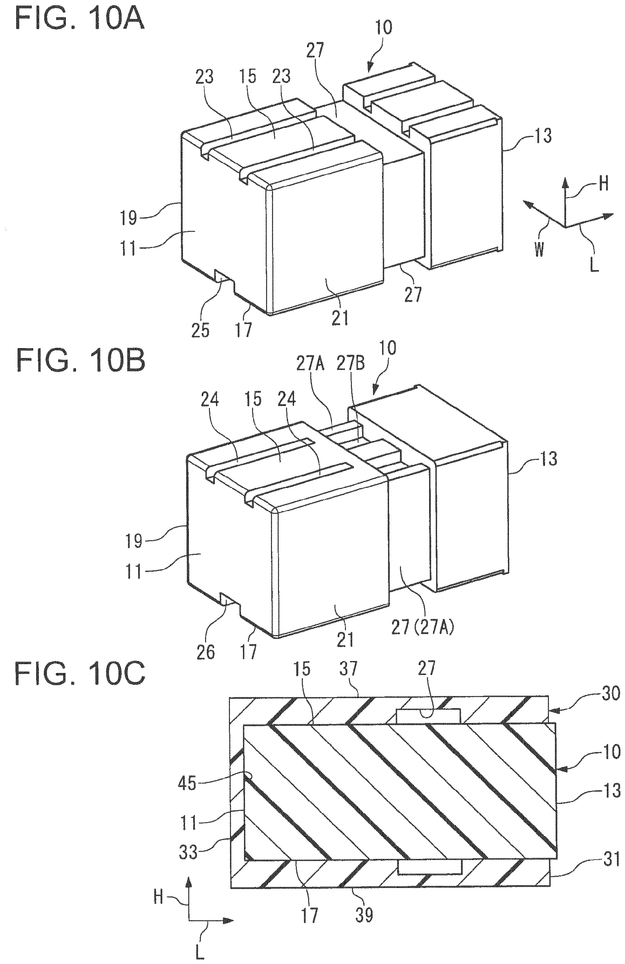

In the first to third embodiments, the water stop groove 27 is provided in the entire region in the circumferential direction of the male housing 10. However, the present invention is not limited to this structure. For example, as shown in FIG. 10A, the water stop groove 27 may be provided only in a specific region in the circumferential direction. The position where the water stop groove 27 is provided may be determined in consideration of, for example, whether or not the position is in the region where the water WD is likely to drop, and the presence of other members such as a member for locking the female housing 30, the description of which is omitted in the male housing 10.

As shown in FIG. 10B, in the second embodiment, the upper guide grooves 24 may be formed in such a manner that the upper guide grooves 24 are separate from the water stop groove 27, or are disconnected from the water stop groove 27. According to this embodiment, even if the water enters the water stop groove 27, the water WD can be prevented from advancing in the mating direction L through the guide part. Although not shown, the upper guide ridges 50 are formed corresponding to the upper guide grooves 24, respectively. The lower guide groove 26 and the lower guide ridge 52 may be formed in such a manner that the lower guide groove 26 is separate from the water stop groove 27, or are disconnected from the water stop groove 27.

Further, as shown in FIG. 10C, even when the water stop groove 27 is provided in the female housing 30, the water stop effect similar to that in the above embodiments can be achieved. That is, the present invention may include at least the water stop groove 27 that is disposed between the male housing 10 and the female housing 30. In this case, the female housing 30 forms the electrical connector of the present invention, and the male housing 10 forms the mating electrical connector of the present invention.

## Claims

1. An electrical connector configured to be mated to a mating electrical connector (30), comprising:
a housing (10); and
a water stop groove (27) extending along a circumferential direction of the housing (10), the water stop groove (27) being orthogonal to a mating direction (L) in which the electrical connector is mated with the mating electrical connector (30),
wherein the water stop groove (27) allows surface tension to act on water accumulated in a region from a mating opening (47) of the mating electrical connector to the water stop groove (27).

2. The electrical connector according to claim 1, wherein the water stop groove (27) is continuously formed in an entire region in the circumferential direction of the housing (10).

3. The electrical connector according to claim 1 wherein the waterstop groove is formed in a specific region in the circumferential direction of the housing (10).

4. The electrical connector according to any one of claims 1 to 3, wherein the water stop groove (27) is formed so as to be positioned closer to a rear end (13) of the housing (10) than to a front end (11) of the housing (10).

5. The electrical connector according to any one of claims 1 to 4, wherein
the housing (10) includes a guide (24) extending in the mating direction (L) so as to guide the electrical connector to mate with the mating electrical connector (30), and
the guide (24) is provided only on a front side of the water stop groove (27) in the mating direction (L).

6. The electrical connector according to any one of claims 1 to 5, wherein
the housing (10) includes a guide groove (28) disposed on a rear side of the water stop groove (27) in the mating direction (L) and extending along the circumferential direction, the guide groove (28) having an opening area smaller than that of the water stop groove (27).

7. The electrical connector according to claim 6 wherein the guide groove (28) is fillable with water entering from the mating opening.

8. The electrical connector according to any one of claims 1 to 7, wherein
the housing (10) is a male housing configured to hold a female contact, and
the water stop groove (27) is formed in an outer peripheral surface of the male housing.

9. An electrical connector assembly (1) comprising:
a first electrical connector configured to hold a female contact; and
a second electrical connector configured to hold a male contact, the first electrical connector and the second electrical connector being matable together,
wherein one of the first electrical connector and the second electrical connector is the electrical connector according to any one of claims 1 to 8.
